Europäisches Patentamt

European Patent Office

Office européen des brevets

(11) Veröffentlichungsnummer: **0 329 818**
**A2**

## (12) EUROPÄISCHE PATENTANMELDUNG

(21) Anmeldenummer: 88113112.2

(22) Anmeldetag: **12.08.88**

(51) Int. Cl.⁴: **F01N 3/02 , B03C 3/66 ,
B03C 3/38**

(30) Priorität: **20.02.88 DE 3805395**

(43) Veröffentlichungstag der Anmeldung:
**30.08.89 Patentblatt 89/35**

(84) Benannte Vertragsstaaten:
**AT CH DE ES FR GB IT LI NL SE**

(71) Anmelder: **MAN Technologie
Aktiengesellschaft
Dachauer Strasse 667
D-8000 München 50(DE)**

(72) Erfinder: **Reichle, Ernst-Michael, Dr.
Dipl.-Phys.
Sanddornweg 22
D-8047 Karlsfeld(DE)**
Erfinder: **Bulang, Wolfgang, Dr, rer. nat.
Dipl.-Phys.
Lavendelweg 6
D-8031 Eichenau(DE)**

(54) **Elektrostatischer Dieselpartikelfilter.**

(57) Es wird vorgeschlagen, bei einem elektrostatischen Dieselpartikelfilter (40) die Koronaelektrode (41) und die Abscheideelektrode (46) an eine mit Wechselspannung (43) überlagerte Gleichspannung (42) anzulegen, um eine gleichmäßige Koronaentladung zu erhalten. Dem elektrostatischen Filter ist in der Abgasleitung vorzugsweise ein Edelmetall-Katalysator vorgeschaltet, mit dem die im Abgas ebenfalls enthaltenen Kohlenwasserstoffe oxidiert werden können.

EP 0 329 818 A2

Fig.2

Die Erfindung bezieht sich auf einen elektrostatischen Dieselpartikelfilter mit einer Koronaelektrode und einer Abscheideelektrode, die an eine Gleichspannung angelegt sind.

Elektrostatische Filter dieser Art sind beispielsweise in der deutschen Patentanmeldung P 37 23 544 beschrieben. Sie enthalten eine drahtförmige erste Elektrode, der eine zylinderförmige Abscheideelektrode zugeordnet ist und die an eine Gleichspannungsquelle angeschlossen ist.

Es hat sich herausgestellt, daß eine derartige Ausführung kein gleichförmiges Feld entlang der Koronaelektrode erzeugt, was die Filtrierwirkung beeinträchtigt.

Der Erfindung liegt die Aufgabe zugrunde, einen Filter der eingangs genannten Art hinsichtlich einer Optimierung der Schadstoffreduktion aus Abgasen von Dieselverbrennungsmaschinen hinwirkend zu verbessern.

Die Aufgabe wird erfindungsgemäß durch die im Anspruch 1 gekennzeichneten Merkmale gelöst.

Durch die Überlagerung der Wechselspannung, die vorzugsweise eine mittelfrequente Hochspannung sein kann, hat sich überraschender Weise eine bedeutende Reduktion der Dieselpartikelemission gezeigt.

Der Erfindung liegt die Erkenntnis zugrunde, daß bei der Speisung der Elektroden mit einer Gleichspannung sich eine unregelmäßige Koronaentladung entlang der Koronaelektrode einstellt, wobei Zonen fast ohne Entladung enthalten sind. Durch die Überlagerung der Wechselspannung konnte die Unregelmäßigkeit in der Koronaentladung ausgeschaltet werden, so daß ein effektiver Partikeltransport entlang des gesamten Filters möglich ist.

Die Filtrierwirkung kann ferner durch eine negative Polung der Koronaelektrode unterstützt werden.

Die Abgase von Dieselmotoren enthalten bekannterweise neben Kohlenstoffpartikel auch Kohlenwasserstoffe. Im Schwachlastbetrieb überwiegen die Kohlenwasserstoffe, während im Vollastbetrieb die Kohlenstoffpartikel überwiegen. Das Bestreben ist, die Emission von derartigen Schadstoffen in bestimmten Grenzen zu halten. Da diese Grenzen durch innermotorische Maßnahmen alleine nicht eingehalten werden können, ist eine Abgasnachbehandlung erforderlich, um die Emission unterhalb der angestrebten Grenzen zu reduzieren.

Gemäß der dualen Struktur dieser Schadstoffe wird die Nachbehandlung der Abgase oft in zwei Stufen, nämlich mit einem Partikelfilter und einem Katalysator durchgeführt. Gemäß der EP 20 766 erfolgt dieses in der Weise, daß im Abgassystem eine Partikelfilter mit Tiefenwirkung aus einem porösen Material und ein nachgeschalteter Katalysator zur Umsetzung der Kohlenwasserstoffe angeordnet wird.

Dieses bekannte System ist mit einem Brenner ausgestattet, um die in Filter zurückgehaltenen Partikeln zu oxidieren. Für einen kontinuierlichen Betrieb der Anlage sind zwei Filter vorgesehen, die wechselweise vom Abgas des Dieselmotors bzw. von den heißen Gasen des Brenners beaufschlagt werden.

Nach dem Filter ist das Abgassystem so ausgestaltet, daß immer nur die Abgase des Dieselmotors durch den einzigen Katalysator durchströmen, während die heißen Brennergase nach Durchströmen des zweiten Filters über einen Bypaß geleitet werden. Dieses hat zur Folge, daß die Abgase den Katalysator mit einer relativ geringen Temperatur erreichen, die keine vollständige Oxidierung der Kohlenwasserstoffe mehr erlaubt.

Die erfindungsgemäße Lösung zur eingangs gestellten Aufgabe wird danach weiter verbessert, wenn gemäß Anspruch 5 dem elektrostatischen Filter ein Katalysator vorgeschaltet wird.

Durch die Vorschaltung des Katalysators vor dem Partikelfilter und der Verwendung eines elektrostatischen Filters zur Umsetzung der Partikelfilter ist ein Converter geschaffen, bei dem ohne der Notwendigkeit der Einleitung von Regeneriervorgängen und ohne nennenswerten bzw. sich verändernden Druckverlusten im Abgassystem eine deutliche Reduktion der Schadstoffe aus Dieselabgasen möglich ist. Damit lassen sich durch Bestimmungen vorgeschriebene Grenzen für Schadstoffemissionen leicht unterschreiten, indem im jeweiligen Fall der Converter entsprechend dimensioniert bzw. ausgelegt wird. Bei diesem System besteht auch keine Gefahr der thermischen Zerstörung.

Gemäß einer weiteren Ausgestaltung der Erfindung ist der Katalysator in der Abgasleitung nahe dem Motor angeordnet. Damit wird erreicht, daß der Katalysator für alle Betriebszustände des Motors eine höhere Temperatur hat, womit eine möglichst hohe Umsatzrate der Kohlenwasserstoffe erreicht werden kann.

Es wird vorzugsweise ein Edelmetall-Katalysator verwendet, bei dem jedes Edelmetall und bevorzugt ein überwiegender Anteil Platin verwendet werden kann.

Die Edelmetalle oxidieren auch das Schwefeldioxid, das durch die Verbrennung des Schwefelanteils im Kraftstoff entsteht, zu Schwefeltrioxid. Dieses verbindet sich mit dem Wasser im Abgas zu Schwefelsäure. Es wird daher vorgeschlagen, den Katalysator in seiner Dimension so auszulegen, daß eine Oxidation der Schwefeldioxide weitgehend vermieden wird. Damit läßt sich der Effekt vorteilhaft nutzen, daß die Umsetzung des Schwefeltrioxids langsamer abläuft als die der Kohlenwasserstoffe. Durch die Optimierung der Größe des Katalysators bzw. der Raumgeschwindigkeit kann somit

die Oxidation des $SO_2$ weitgehend unterdrückt werden. Der motornahe Einbau des Katalysators bewirkt auch in gewissem Grad eine Reduzierung der $SO_2$-Umsetzung, denn diese geht bei Temperaturen über 500°C aus thermodynamischen Gründen zurück.

Gemäß einer weiteren Ausgestaltung der Erfindung ist der Katalysator so ausgebildet, daß er mindestens teilweise vom Abgas umströmt wird. In diesem Fall kann der Katalysator auch in einem ungünstigeren Temperaturbereich angeordnet werden, um günstigere Umsetzungsverhältnisse für beide Komponenten, nämlich $SO_2$ und Kohlenwasserstoffe zu erreichen.

Als Katalysatorträger eignet sich jede Grobstruktur aus temperaturbeständigen Materialien, wie Keramik und temperaturbeständige Metalle. Damit werden die noch nicht ausgefilterten Partikel der Abgase nicht festgehalten, so daß der durch den Katalysatorträger verursachte geringe Druckabfall konstant bleibt, d. h. nicht durch die Partikel beeinträchtigt wird.

Für den elektrostatischen Filter wird ferner eine Koronaelektrode bevorzugt, die aus einem dünnen Draht oder einem dickeren Draht mit Spitzenbesatz besteht. Damit läßt sich durch Anlegen der Hochspannung zwischen der Koronaelektrode und der Abscheideelektrode eine möglichst starke Koronaentladung bilden, womit Sauerstoffionen aktiviert werden, die eine Oxidation der Dieselpartikel unterstützen.

Der elektrostatische Filter ist vorzugsweise so ausgebildet, daß die Partikeln aufgrund des elektrostatischen Feldes von der Abgasströmung heraus in eine beruhigte Zone geführt werden. Damit erhöht sich die Verweildauer der Partikel innerhalb des elektrostatischen Filters, so daß sie durch den Restsauerstoff im Abgas und die im Filter gebildeten Sauerstoffionen und OH-Radikale oxidiert werden.

Dazu eignet sich ein zylindrischer Filter, in dessen Achse die drahtförmige Koronaelektrode angeordnet ist, und der innerhalb des Wandungsbereiches grobstruktuierte Abscheidewände enthält, in denen sich die Partikel verfangen und oxidiert werden. Durch eine katalytische Beschichtung der Abscheidestruktur kann die Oxidierung unterstützt werden.

In der Zeichnung sind Ausführungsbeispiele der Erfindung schematisch dargestellt. Es zeigen:

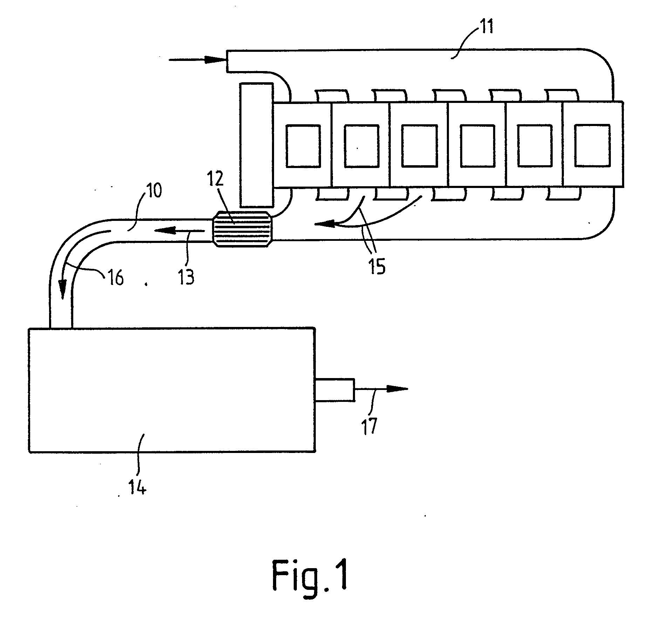

Fig. 1 eine Abgasanlage mit einem Abgasconverter,

Fig. 2 eine Ausführung eines elektrostatischen Filters,

Fig. 3 und 4 je ein Beispiel eines Katalysators.

Im Abgassystem 10 einer mit Dieselkraftstoff betriebenen Verbrennungsmaschine 11 ist nahe am Austritt der Abgasleitung von der Verbrennungsmaschine 11 ein Katalysator 12 angeordnet. In Strömungsrichtung 13 nach dem Katalysator 12 ist ein elektrostatischer Filter 10 im Abgassystem 10 zwischengeschaltet. Die schadstoffenthaltenen Abgase 15 gelangen nahezu mit ihrer Austrittstemperatur aus dem Motorzylindern in den Katalysator 12, worin unterstützt durch die höheren Temperatur die Kohlenwasserstoffe oxidiert werden, wobei unter Anwendung eines Edelmetall-Katalysators und durch Unterstützung einer möglichst niedrigen Raumgeschwindigkeit der Abgase eine weitgehend vollständige Oxidierung der Kohlenwasserstoffe erreicht werden kann. Wenn von einer Reduzierung der Kohlenwasserstoffe abgesehen werden soll, wird selbstverständlich der Katalysator 12 weggelassen.

Die von Kohlenwasserstoffen befreiten, jedoch Kohlenstoffpartikel beladenen Abgase 16 gelangen danach in den elektrostatischen Filter 14. Hierin werden die Partikel herausgetrennt und oxidiert, so daß die daraus strömenden Abgase 17 von Schadstoffen weitgehend befreit sind.

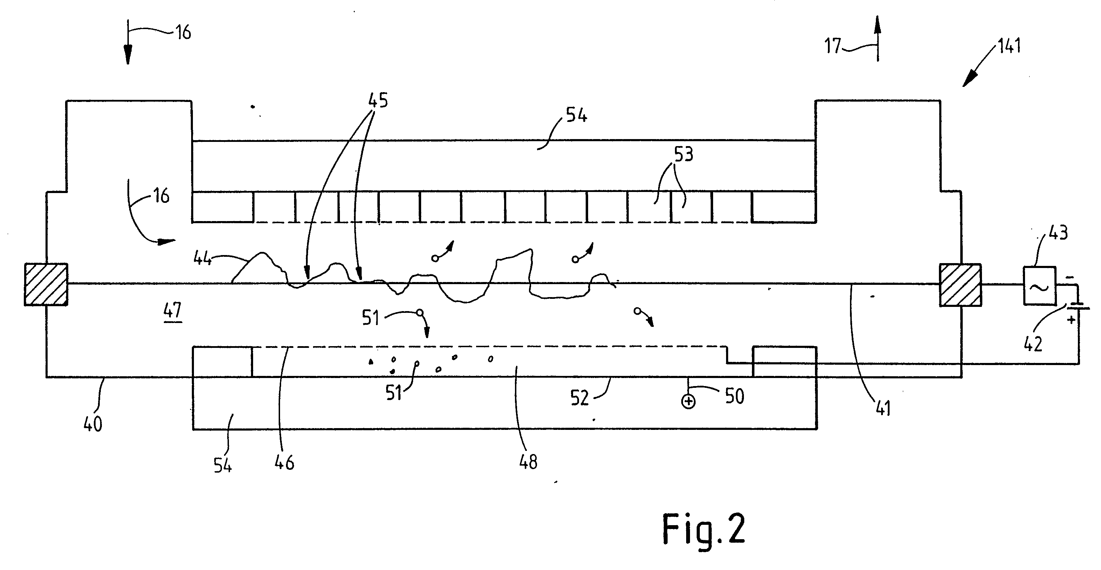

In Fig. 2 ist ein elektrostatischer Filter 141 im Längsschnitt dargestellt. In einem in wesentlichen zylinderförmigen Filtergehäuse 40 ist eine Koronaelektrode 41 entlang der Gehäuseachse gespannt. Die Koronaelektrode 41 ist an eine Gleichspannung 42 mit überlagerter Wechselspannung 43 angelegt, wobei die Koronaelektrode 41 negativ gepolt ist. Bei der Verwendung nur einer Gleichspannung für den elektrostatischen Filter ist die mit der Kurve 44 symbolisierte Entladung entlang der Koronaelektrode 41 sehr unregelmäßig, wobei Bereiche 45 ohne oder mit nur geringer Entladung verbleiben, die für den Filtriereffekt ausfallen. Durch die Überlagerung der Gleichspannung mit einer Wechselspannung wird ein Ausgleich erreicht, bei dem eine weitgehend gleichförmige Entladung entlang der gesamten Elektrode 41 erfolgt.

Bei der Wechselspannung handelt es sich um eine mittel- oder hochfrequente Hochspannung.

Das Filtergehäuse 40 ist mittels einer metallischen Wand 46, die ein Drahtgewebe ist oder eine ähnliche Struktur hat, in einen Strömungsraum 47 und einen von diesem abgeschirmten ruhigen Raum 48 getrennt. Das Abgas 16 tritt in den Strömungsraum 47 ein, wo die darin enthaltenen Partikeln 51 aufgrund der starken Koronaentladung aufgeladen und durch die Wirkung des elektrischen Feldes auf die metallische Wand 46 hin abgelenkt werden, wobei sie teilweise durch diese Wand hindurchtreten und in den strömungsberuhigten Bereich 48 des Filtergehäuses 40 gelangen. Zur Verstärkung des Eintrittes der Partikel in den beruhigten Bereich 48 kann noch eine Zugspannung 50 zwischen der metallischen Wand 46 und dem Gehäuse 40 vorgesehen werden.

Im beruhigten Bereich 48 haben die Partikel 51 eine längere Verweilzeit bzw. scheiden sich auf der Außenwand 52 des Filtergehäuses 40 kurzzeitig ab. Eine Restströmung kann im beruhigten Raum 48 durch deren Aufteilung in Kammern 53, wie in Fig. 2, obere Hälfte, gezeigt ist, weitberuhigt werden.

Die brennbaren Partikel 51 werden im beruhigten Bereich 48 bzw. 53 sowie auch an der Koronaelektrode 41 durch den Restsauerstoff im Abgas 16 und durch angeregte Sauerstoffmoleküle und OH-Radikale oxidiert, die durch die Wechselwirkung der Elektronen mit Sauerstoff und Wasserdampf in dem Strömungsraum 47 entstehen. Zur Beschleunigung der Oxidationsprozesse bei höheren Temperaturen kann der Filter außen mit einer thermischen Isolierung 44 versehen werden. Die Mögkeit, eine Luftzufuhr in den Filter 40 vorzusehen, führt zu einer Verbesserung des reaktiven Umsatzes im Vollastbereich des Motors. Eine weitere Maßnahme zur Verbesserung der Effektivität des Filters ist der Einbau eines Pulsationsdämpfers, z. B. eines Schalldämpfers, in Strömungsrichtung vor dem Filter, um den Oxidationsprozeß der Partikel 51 nicht durch Druckstöße zu beeinträchtigen.

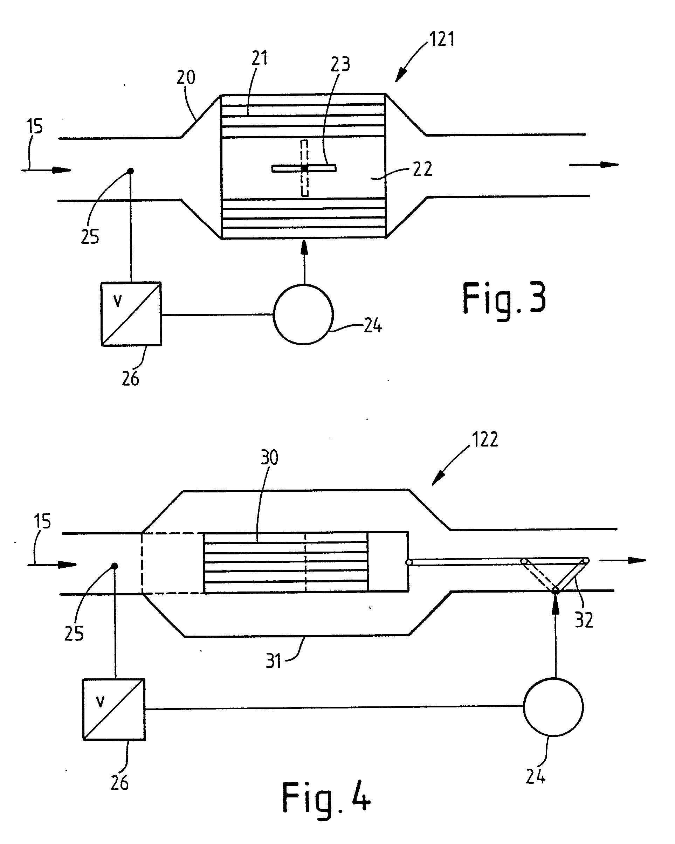

In Fig. 3 ist ein Katalysator 121 im Längsschnitt näher dargestellt. In einem erweiterten Abgasrohrabschnitt 20 ist ein wabenförmiger Katalysatorträger 21 angeordnet, der ringförmig ausgebildet, im Mittelbereich einen freien Durchgang 22 umschließt. Im freien Durchgang 22 ist eine Klappe 23 vorgesehen, die bei Bedarf mittels eines Motors 24 in Abhängigkeit der Temperatur der eintretenden Abgase 15 betätigt werden kann. Dafür ist ein Temperaturfühler 25 und ein Regler 26 vorgesehen.

Der Katalysatorträger kann eine Wabenstruktur aus Keramik oder Blech sein, es ist jedoch jede Struktur geeignet, wie Wellblechstrukturen, grobmaschige Drahtgestricke usw., die einen nur geringen Druckabfall im Abgassystem verursachen.

In Fig. 4 ist eine weitere Ausführung eines Katalysators 122 dargestellt, bei dem der Katalysatorträger 30 mittig im Gehäuse 31 angeordnet ist, derart, daß die Abgase 15 den Katalysatorträger 30 umspülen können. Eine Regulierklappe 32 ist in diesem Fall in einem kühleren Außenbereich nach dem Katalysator 31 angeordnet. Für die Oxidierung von Kohlenwasserstoffen wird ein Edelmetall-Katalysator vorgesehen, dessen katalytische Schicht überwiegend Platin enthält, das mit anderen Edelmetallen, wie Rhodium, Paladium gemischt sein kann. Die Edelmetalle oxidieren allerdings auch Schwefeldioxid ($SO_2$), das durch die Verbrennung des Schwefelanteils im Kraftstoff entsteht, zu Schwefeltrioxid ($SO_3$). Dieses verbindet sich mit dem Wasser im Abgas zu Schwefelsäure. Die Oxidation des $SO_2$ ist stark temperaturabhängig. Unter 250° C ist sie kinetisch gehindert und über 500° C geht sie aus thermodynamischen Gründen zurück. Auch aus diesem Grund ist ein Einbau des Katalysators 12 möglichst nah am Motor 11 von Vorteil. Auf der anderen Seite läuft die Umsetzung des $SO_2$ nicht so rasch ab, wie die der Kohlenwasserstoffe. Dies berücksichtigend, läßt sich durch eine Optimierung der Größe des Katalysators und der Durchströmgeschwindigkeit der Abgase die Oxidation des $SO_2$ dahingehend beeinflussen, daß diese weitgehend unterdrückt wird. Allerdings ist damit eine Einbuße der Kohlenwasserstoff-Reduktion möglich. Durch die Möglichkeit der Umströmung des Katalysatorträgers 21 bzw. 30 und der Regulierung des Umstromes in Abhängigkeit der Abgastemperatur ist eine Optimierung zwischen Verringerung der $SO_2$-Umsetzung und der Erhöhung der Kohlenwasserstoffumsetzung möglich.

## Ansprüche

1. Elektrostatischer Dieselpartikelfilter mit Koronaelektrode und einer Abscheideelektrode, die an eine Gleichspannung angelegt sind,
dadurch gekennzeichnet,
daß eine Hochspannungsquelle (42, 43) vorgesehen ist, die eine mit Wechselspannung überlagerte Gleichspannung liefert.

2. Filter nach Anspruch 1, dadurch gekennzeichnet, daß eine mittelfrequente Wechselspannung vorgeshen ist.

3. Filter nach Anspruch 1 oder 2, dadurch gekennzeichnet, daß die Koronaelektrode (41) negativ gepolt ist.

4. Filter nach einem der vorhergehenden Ansprüche, dadurch gekennzeichnet, daß der Filter so ausgebildet ist, daß die Partikeln (51) aufgrund des elektrstatischen Feldes von der Abgasströmung (16) heraus in einen beruhigten Bereich geführt werden können.

5. Filter nach Anspruch 4, dadurch gekennzeichnet, daß der beruhigte Bereich (48) eine katalytische Beschichtung aufweist.

6. Filter nach Anspruch 5, dadurch gekennzeichnet, daß dem elektrostatischen Partikelfilter (14) ein Katalysator (12) vorgeschaltet ist.

7. Filter nach Anspruch 6, dadurch gekennzeichnet, daß der Katalysator (12) in der Abgasleitung (10) einer Verbrennungsmaschine (11) nahe der Maschine angeordnet ist.

8. Filter nach Anspruch 6 oder 7, dadurch gekennzeichnet, daß eine Edelmetall-Katalysator vorgesehen ist.

9. Filter nach einem der Ansprüche 6 - 8, dadurch gekennzeichnet, daß der Katalysator (12) in seiner Dimensionierung so ausgelegt ist, daß eine Oxidation der im Gas enthaltenden Schwefeldioxide weitgehend vermieden wird.

10. Filter nach Anspruch 9, dadurch gekennzeichnet, daß der Katalysator so ausgestattet ist, daß aufgrund einer hohen Raumgeschwindigkeit der Abgase (15) eine Oxidation der im Abgas enthaltenen Schwefeldioxide unterdrückt wird.

11. Filter nach einem der Ansprüche 5 - 9, dadurch gekennzeichnet, daß der Katalysator (21 bzw. 30) mindestens teilweise vom Abgas (15) umströmbar ist.

Fig.1

7. 2531 a

Fig.2

7.2531 b

Fig. 3

Fig. 4

7. 2531 c.